# EUROPEAN PATENT APPLICATION

(11) **EP 1 024 543 A2**
(43) Date of publication of application: **02.08.2000**
(21) Application number: 99117873.2
(22) Date of filing: 10.09.1999
(51) Int. Cl.: H01M 2/10, H04N 5/225, G11B 31/00

(54) **End loading dual form battery compartment for portable electronic devices**

(30) Priority: 29.01.1999 US 240292
(71) Applicant: Hewlett-Packard Company, Palo Alto, CA 94304 (US)
(72) Inventor: Bean, Heather N., Fort Collins, CO 80521 (US)
(74) Representative: Schoppe, Fritz, Dipl.-Ing.

(57) **Abstract**

An apparatus (100) for housing batteries in a portable electronic device having a slot (110) disposed within the device, the slot configured to accept first and second battery types. The apparatus is an integral part of the portable electronic device. A feature of the present invention is that by accepting first and second battery types― standard batteries and standard rechargeable battery packs― the user does not have to purchase and keep track of an adapter frame or custom batteries. The standard batteries fit in the same space designed to accept the rechargeable pack, with each of the standard batteries referenced off of each other and the walls of the compartment for mechanical stability. In a preferred embodiment, the compartment is configured to accept four standard AA batteries or a two 18650 cell lithium ion rechargeable battery pack. The present invention incorporates a standard end-loading scheme that is widely used in consumer electronics today.

## Description

### FIELD OF THE INVENTION

The present invention relates generally to batteries and more particularly to a battery compartment that is configured to accept standard batteries and battery packs.

### BACKGROUND OF THE INVENTION

A battery is a device which converts chemical energy into electricity. Generally, a battery consists of two or more cells interconnected in either series or in parallel. A cell consists of a paste or solid electrolyte, and positive and negative electrodes. When the electrodes are connected to a device to be powered, an electrical current flows from the positive electrode of the battery, through the device, and back to the negative electrode of the battery. Batteries in which the chemicals cannot be reconstituted once the energy has been converted are called primary cells. Batteries in which the chemicals can be reconstituted via an electric current are called secondary or rechargeable cells.

A well-known example of a primary cell is standard alkaline battery. The electrolyte is an alkaline gel, usually potassium hydroxide. The positive electrode is made of magnesium dioxide; the negative electrode is made of zinc. Well-known rechargeable batteries are nickel-cadmium, nickel-metal hydride, or lithium ion batteries. Secondary batteries self-discharge more rapidly than primary batteries and must be recharged before they are used.

Manufacturers of battery-powered, portable consumer electronics typically must select one form factor, or type of battery to use-typically either AA-sized batteries or a rechargeable pack. Either choice necessarily limits the user to the available battery chemistries that are available in the chosen form factor. The user is also restricted to the inherent disadvantages of the selected solution. For example, while batteries packaged in the more standard form factor (i.e., AA) are cheap and readily available, the technical performance of the AA is often lacking in power, voltage, size, and reusability over rechargeable battery packs, especially in high-drain electronic devices. A rechargeable battery pack may hold more energy for its size while being longer lasting and reusable. However, battery packs are difficult have readily charged and available at all times and in all locations. This can be further complicated by the fact that if the rechargeable pack is customized specifically to one device, it may be very difficult and costly to get replacement and additional batteries.

Some manufacturers have tried to marry the two form factors by creating an adapter frame that accepts standard AA batteries and has similar outside dimensions and contact placement to a rechargeable battery pack. One such solution is discussed in US Patent No. 5,225,29 for NON-RECHARGEABLE BATTERY PACK of Arthur Schifrin. One disadvantage of this solution is the user must still make a choice as to which type of battery to use-either the standard dry cell (placed in Schifrin's pack, or a rechargeable battery.) Another disadvantage is the fact that the user must purchase, and keep track of, an additional pack or adapter frame.

Other manufacturers have tried to marry the two form factors by creating custom battery packs that attempt to mimic the shape and contact placement of the primary cells. This, however, causes a loss in energy and efficiency in the battery pack because the cell sizes are generally not the same size or voltage. This also necessitates the construction, use, and sale of a custom, application-specific battery pack. Both of these techniques also rely on the use of the same set of battery contacts to provide power to the device, whether or not standard cells or a rechargeable pack is used. This makes in-device battery charging problematic and dangerous, as it is difficult for the device to distinguish between the insertion of a rechargeable pack and primary batteries that should not be charged.

### SUMMARY OF THE INVENTION

The present invention provides an apparatus that is an integral part of the portable electronic device. This part is an end-loading, dual form factor battery compartment which accepts first and second battery types-- standard batteries and standard rechargeable battery packs- without requiring the user to purchase and keep track of an adapter frame. The standard batteries fit in the same space designed to accept the rechargeable pack, with each of the standard batteries referenced off of each other and the walls of the compartment for mechanical stability. The standard batteries are also designed to use separate contacts from the rechargeable batteries to provide power to the electronic device, which improves the safety and simplicity of in-device recharging since it is possible to easily determine electronically which battery type is inserted. In a preferred embodiment, the compartment is configured to accept four standard AA batteries or a two 18650 cell lithium ion rechargeable battery pack. The present invention incorporates a standard end-loading scheme that is widely used in consumer electronics today.

### BRIEF DESCRIPTION OF THE DRAWINGS

Figures 1a and 1b show perspective views of the battery compartment according to the present invention.

Figures 2a and 2b show a cut-away view of the battery compartment in two different configurations to accommodate two different battery form factors.

Figure 3 shows the battery compartment slider according to the present invention.

Figure 4 shows a top view of the battery compartment with four AA standard batteries inserted therein.

### DETAILED DESCRIPTION OF THE PREFERRED EMBODIMENT

Briefly, the present invention provides an apparatus that, as an integral part of a digital camera, accepts both standard batteries and standard rechargeable battery packs without requiring the user to purchase and keep track of an adapter frame or custom batteries. The claimed battery compartment comprises a slot in which first and second battery types can be inserted, i.e., standard batteries fit in the slot designed to accept the rechargeable pack. In a preferred embodiment, the compartment is configured to accept four standard AA batteries or a lithium ion two 18650 cell rechargeable battery pack in the normal, end-loading scheme.

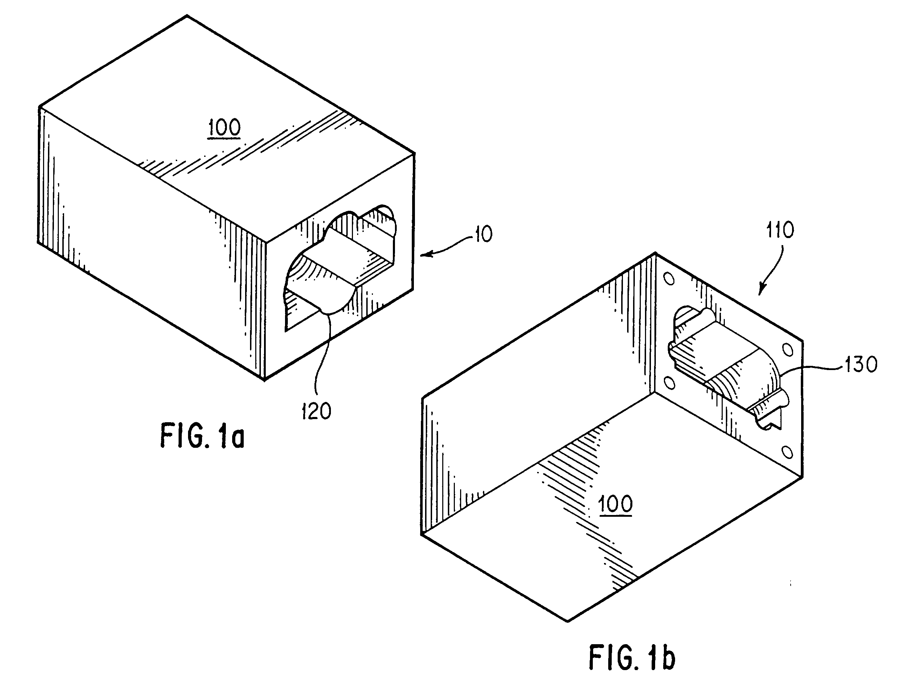

The claimed apparatus will now be described with reference to figures 1a and 1b, which show perspective views of the battery compartment according to the present invention. The battery compartment 100 is shown as a stand-alone apparatus when in fact, the present invention contemplates being an integral part of a digital camera, for example, or any other portable electronic device which uses batteries to be powered. The slot 110 is configured to accept first and second battery types-- both standard AA batteries and custom battery packs. Slot 110 has two separate perimeter openings. The first, or top opening 120 is essentially configured so as to accept a custom battery pack. The second, or bottom opening is configured to accept a battery compartment slider as will be described more fully below. In a preferred embodiment, the slot is configured to accept four standard AA batteries or a lithium ion two 18650 cell rechargeable battery pack. The lithium ion two 18650 cell rechargeable battery pack was chosen as a preferred embodiment because they are becoming prevalent in consumer electronic applications due to their light weight, smaller size and longer life in comparison to the common nickel cadmium battery packs so widely used in the early 1990s. Their performance is also superior to other consumer- compatible (1.2-1.8V nominal) rechargeable chemistries available in the AA form factor, such as nickelcadmium and nickel-metal hydride. Other configurations could be used without departing from the spirit and scope of the present invention.

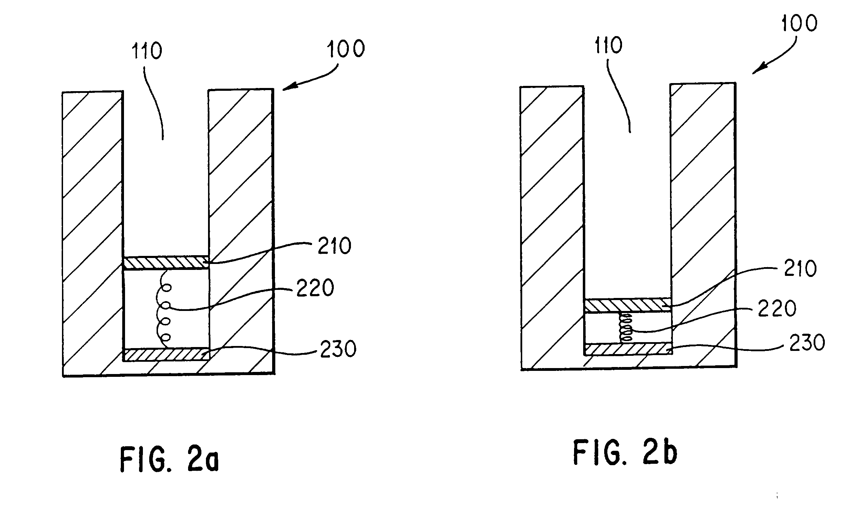

Figures 2a and 2b show a cut-away side view of the battery compartment in two different configurations to accommodate two different battery form factors. Figure 2a shows a side view of the compartment 100 as it would be configured with standard AA batteries inserted into slot 110. A slider 210 is disposed near the bottom of the slot 210. A compliant member 220, such as a spring, is attached to the slider 210 and a bottom plate 230. The compliant member 220 is in its relaxed, or extended position when standard AA batteries are used. Contacts (not shown) adapted for standard AA batteries can be disposed on the slider 210 or a compartment lid (not shown).

Figure 2b shows the side view of the compartment 100 as it would be configured with a rechargeable battery pack inserted into slot 110. As can be readily seen, compliant member 220 is compressed by slider 210 and the battery pack which is longer than standard cells. Contacts adapted for the battery pack can be either disposed on slider 210 or, if contact posts are used, can extend through holes in slider 210.

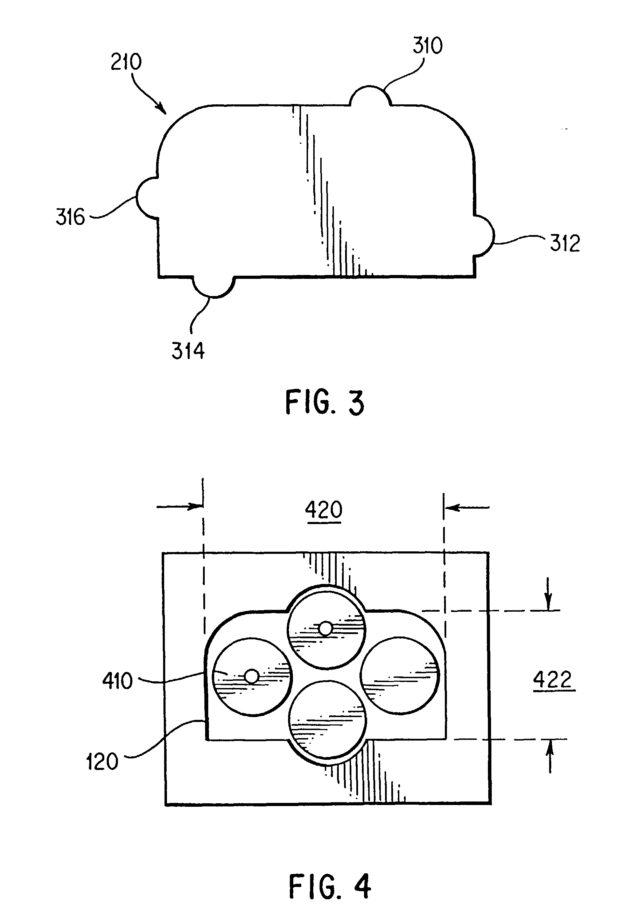

Figure 3 shows the compartment slider 210 according to the present invention. Stubs 310, 312, 314 and 316 are placed along the perimeter of slider 210 in such a way as to coordinate with grooves located in slot 110 (see figure 1b). These stubs prevent the slider from rotating as the two different battery form factors are interchanged in the compartment 100. Although figure 3 shows one configuration of the slider 210, other shapes could be used without departing from the scope of the present invention. For example, larger or smaller stubs could be used; and the space between stubs 310 and 312, and between 314 and 316 could be increased or decreased.

Figure 4 shows a top view of the battery compartment with four AA standard batteries 410 inserted therein. As mentioned above, the top opening 120 is essentially configured so as to accept a rechargeable battery pack. In a preferred embodiment, the width 420 is 38.2 mm while the height 422 is 20.6 mm. As shown, curved grooves in both the top and bottom walls of the compartment 100 are configured to accept the standard cells while allowing the four AA standard battery cells to be referenced off each other and the walls of the compartment for mechanical stability.

While the present invention has been illustrated and described in connection with the preferred embodiment, it is not to be limited to the particular structure shown. It should be understood by those skilled in the art that various changes and modifications may be made within the purview of the appended claims without departing from the spirit and scope of the invention in its broader aspects.

## Claims

1. An apparatus (100) for housing batteries in a digital camera, the apparatus comprising:
a slot (110) disposed within the digital camera, the slot configured to accept first and second battery types.

2. The apparatus of claim 1, further comprising:
a slider (210) disposed within the slot; and
a compliant member (220) attached to the slider, the compliant member compresses when the first battery type is inserted into the slot.

3. The apparatus of claim 2, wherein the compliant member is a spring.

4. The apparatus of claim 3 wherein the first battery type is a rechargeable battery pack.

5. The apparatus of claim 4, wherein the first battery type is a lithium ion two 18650 cell rechargeable battery pack.

6. The apparatus of claim 5, wherein the second battery type is a standard AA battery.

7. The apparatus of claim 2, wherein the slot is configured to accept four batteries of the second battery type.

8. A battery compartment (100) for housing batteries, the compartment disposed within a portable electronic device, the compartment comprising:
a slot (110) disposed within the compartment, the slot configured to accept first and second battery types;
a slider (210) disposed within the slot; and
a compliant member (220) attached to the slider, the compliant member compresses when the first battery type is inserted into the slot.

9. The battery compartment of claim 8, wherein the first battery type is a rechargeable battery pack and the second battery type is a standard AA battery.
